# EUROPÄISCHE PATENTSCHRIFT

(11) **EP 3 174 752 B1**
(45) Veröffentlichungstag und Bekanntmachung des Hinweises auf die Patenterteilung: **24.10.2018**
(21) Anmeldenummer: 15727379.8
(22) Anmeldetag: 02.06.2015
(51) Int. Cl.: B60K 26/02, G05G 1/30, G05G 1/44

(54) **FAHRPEDALMODUL FÜR EIN KRAFTFAHRZEUG**
ACCELERATOR PEDAL MODULE FOR A MOTOR VEHICLE
MODULE DE PÉDALE D'ACCÉLÉRATEUR DE VÉHICULE AUTOMOBILE

(30) Priorität: 30.07.2014 DE 102014214942
(43) Veröffentlichungstag der Anmeldung: 07.06.2017
(73) Patentinhaber: Robert Bosch GmbH, 70442 Stuttgart (DE)
(72) Erfinder: CIZEK, Vaclav, 39111 Plana nad Luznici (CZ)
(86) Internationale Anmeldenummer: PCT/EP2015/062287
(87) Internationale Veröffentlichungsnummer: WO 2016/015904

(56) Entgegenhaltungen:
- EP-A1- 1 428 714
- WO-A1-2004/045886
- DE-A1- 19 500 569
- DE-A1-102012 111 315
- US-A1- 2004 149 069

## Beschreibung

### Gebiet der Erfindung

Die Erfindung betrifft ein Fahrpedalmodul zum Steuern oder Regeln einer Leistung und/oder eines Drehmoments einer Antriebsmaschine eines Kraftfahrzeugs.

### Hintergrund der Erfindung

In modernen Kraftfahrzeugen werden zunehmend Fahrpedalmodule eingesetzt, bei welchen eine mechanische Betätigung eines Pedals, wie etwa eines Fußpedals, in ein elektrisches Signal umgesetzt wird. Das elektrische Signal kann dann zum eigentlichen Steuern oder Regeln eines Drehmoments einer Antriebsmaschine des Kraftfahrzeugs, wie etwa einer Brennkraftmaschine und/oder einer elektrischen Maschine, dienen.

Derartige "bowdenzuglose" Fahrpedalmodule können einen mitunter komplexen, vielkomponentigen Aufbau aufweisen. In der Regel weisen sie einen um eine Schwenkachse drehbar gelagerten Pedalhebel auf. An der Schwenkachse kann beispielsweise eine Sensorwelle eines Drehsensors angeordnet sein, welcher ein von einer Stellung des Pedalhebels abhängiges elektrisches Signal erzeugen kann. Bei einem Betrieb einer Brennkraftmaschine kann dieses elektrische Signal etwa von einem Steuergerät weiterverarbeitet werden und einem Stellmotor einer Drosselklappe der Brennkraftmaschine zugeführt werden, so dass in Abhängigkeit der Stellung des Pedalhebels die Leistung und/oder das Drehmoment geregelt werden kann. Bei einer elektrischen Antriebsmaschine kann das elektrische Signal auch zum Ansteuern und/oder Regeln eines Elektromotors dienen.

Ein Fahrpedalmodul der obenstehend beschriebenen Art ist aus der EP 1 428 714 A1 bekannt, bei welchem der Pedalhebel an einem Lagerbock um eine Schwenkachse schwenkbar gehalten ist und eine mit der Schwenkachse koaxiale Sensorwelle des Drehsensors betätigt. Dabei ist zumindest ein Teil der Sensorwelle unmittelbar in einer Lagerbohrung eines mit dem Lagerbock einstückigen Lagerbereichs drehgelagert, von welchem zumindest ein Teil einer radial äußeren Umfangsfläche wenigstens eine Lagerfläche für den Pedalhebel bildet.

### Offenbarung der Erfindung

Ausführungsformen der vorliegenden Erfindung erlauben in vorteilhafter Weise, ein robustes Fahrpedalmodul für ein Kraftfahrzeug, wie etwa einen Pkw, einen Lkw, einen Bus oder einen Zug, bereitzustellen.

Ein Aspekt der Erfindung betrifft ein Fahrpedalmodul für ein Kraftfahrzeug, welches einen Pedalhebel, ein Pedalgehäuse und ein Rückstellfederelement aufweist. Der Pedalhebel weist an einem Ende einen Pedalhebelkopf auf, über den der Pedalhebel um eine Drehachse drehbar an dem Pedalgehäuse gelagert ist. Dabei weist der Pedalhebelkopf zwei einander gegenüberliegende und konzentrisch mit der Drehachse angeordnete innenliegende kreisbogenförmige Führungsflächen auf, und an dem Pedalgehäuse ist ein näherungsweise komplementär zwischen die innenliegenden Führungsflächen eingreifender, kreisbogenförmiger Vorsprung ausgebildet. Das Rückstellfederelement ist derart zwischen dem Pedalgehäuse und dem Pedalhebelkopf angeordnet, dass es eine Rückstellkraft auf den Pedalhebel hin zu einer Ruheposition ausübt. Das Fahrpedalmodul zeichnet sich insbesondere dadurch aus, dass der Pedalhebelkopf einen starren Bereich und einen länglichen elastischen Bereich aufweist, wobei das Rückstellfederelement zwischen dem länglichen elastischen Bereich und dem Pedalgehäuse angreift. Weiter ist eine der innenliegenden Führungsflächen an dem länglichen elastischen Bereich gebildet, und der längliche elastische Bereich ist an einem ersten Ende mit dem starren Bereich verbunden und an einem zweiten Ende freitragend und über einen Spalt von dem starren Bereich beabstandet.

Durch den erfindungsgemäßen Aufbau des Pedalhebelkopfes mit dem starren und dem elastischen Bereich sowie den innenliegenden Führungsflächen, welche an zwei sich gegenüberliegenden Seiten des kreisbogenförmigen Vorsprungs des Pedalgehäuses zumindest teilweise anliegen und diesen zumindest teilweise umgreifen können, kann in vorteilhafter Weise ein hystereseartiger Verlauf einer Betätigungskraft des Pedalhebels gegen einen Betätigungsweg des Pedalhebels generiert werden, so wie untenstehend im Detail beschrieben. Insbesondere im Hinblick auf einen Fahrkomfort für einen Fahrer des Kraftfahrzeugs kann sich eine derartige Kraft-Pedalweg-Hysterese vorteilhaft auswirken. Wird etwa ein Pedal bzw. Fußpedal, welches dem Pedalhebelkopf gegenüberliegen kann, durch den Fahrer betätigt und soll eine gewisse Leistung bzw. Geschwindigkeit des Kraftfahrzeugs annähernd konstant gehalten werden, so kann durch leichtes Loslassen des Pedals die Rückstellkraft, welche der Betätigung entgegenwirken kann, reduziert werden, ohne dabei die Geschwindigkeit des Kraftfahrzeugs stark zu reduzieren. Dadurch kann insbesondere bei langen Fahrten ein schnelles Ermüden des Fahrers reduziert werden.

Durch das Zusammenwirken des starren und des elastischen Bereiches des Pedalhebelkopfes sowie durch deren Zusammenwirken mit dem Vorsprung des Pedalgehäuses kann die Kraft-Pedalweg-Hysterese bereitgestellt werden, ohne dass zusätzliche Komponenten für eine derartige Funktion nötig wären. Dies kann sich wiederum vorteilhaft im Hinblick auf eine Robustheit sowie auf Produktionskosten des Fahrpedalmoduls auswirken.

Die "innenliegenden" Führungsflächen können als Abgrenzung gegenüber einer Außenfläche des Pedalhebelkopfes verstanden werden. Ferner kann der kreisbogenförmige Vorsprung eine Abragung des Pedalgehäuses oder ein in ein Inneres des Pedalgehäuses abragendes Element bezeichnen.

Gemäß einer Ausführungsform der Erfindung ist der Pedalhebel des Fahrpedalmoduls einstückig ausgebildet. Beispielsweise kann der Pedalhebel in einem Spritzgussverfahren aus einem Kunststoffmaterial gefertigt sein. Durch eine einstückige Ausgestaltung des Pedalhebels kann eine Anzahl von Komponenten bzw. Bauteilen des Fahrpedalmoduls reduziert werden, was sich wiederum vorteilhaft auf Herstellungskosten sowie eine Störanfälligkeit und Wartungsarbeiten des Fahrpedalmoduls auswirken kann.

Gemäß einer Ausführungsform der Erfindung kann an einer der innenliegenden Führungsflächen eine reibungserhöhende Oberfläche vorgesehen werden. Die reibungserhöhende Oberfläche kann etwa durch ein Aufrauen der Oberfläche und/oder ein Einbringen einer Struktur in die Oberfläche gebildet sein. Dabei kann "reibungserhöhend" als die Reibung bzw. den Reibungskoeffizienten der Oberfläche relativ zu einer unbehandelten und/oder relativ zu einer weiteren Oberfläche des Pedalhebelkopfes erhöhenden verstanden werden.

Gemäß einer Ausführungsform der Erfindung ist die reibungserhöhende Oberfläche an der an dem länglichen elastischen Bereich ausgebildeten innenliegenden Führungsfläche vorgesehen.

Gemäß einer Ausführungsform der Erfindung kann die reibungserhöhende Oberfläche durch ein an dem länglichen elastischen Bereich angeordnetes Reibelement bereitgestellt werden. Das Reibelement kann aus einem elastischen Material, beispielsweise aus einem Elastomer, gefertigt sein. Das Reibelement kann beispielsweise stoffschlüssig mit dem länglichen elastischen Bereich verbunden sein; etwa kann das Reibelement zumindest teilweise mit dem elastischen Bereich verklebt sein. Alternativ oder zusätzlich kann das Reibelement durch Formschluss mit dem elastischen Bereich verbunden sein.

Gemäß einer Ausführungsform der Erfindung ist an dem starren Bereich ein Lager vorgesehen, über das der Pedalhebel drehbar bzw. schwenkbar an dem Pedalgehäuse gelagert ist. Das Lager kann eine Schwenkachse bzw. Drehachse des Pedalhebels definieren. Das Lager kann beispielsweise durch einen Teilbereich des starren Bereichs gebildet sein. Alternativ oder zusätzlich kann das Lager weitere Komponenten, wie etwa ein Gleitelement bzw. einen Gleitring aufweisen, so dass ein Verschleiß des Lagers verringert und/oder ein Schwenkwiderstand reduziert werden kann.

An dem Lager kann ferner ein Drehsensor angeordnet sein, welcher dazu ausgeführt sein kann, einen Pedalweg bzw. einen Grad der Betätigung des Pedalhebels zu detektieren. Beispielsweise kann der Drehsensor mithilfe einer Welle, welche koaxial zur Drehachse des Pedalhebels verlaufen kann, und/oder mithilfe eines Magnetelements den Pedalweg bestimmen.

Gemäß einer weiteren Ausführungsform der Erfindung sind zwei Teilbereiche einer Außenoberfläche des Pedalhebelkopfs als weitere konzentrisch mit der Drehachse angeordnete kreisbogenförmige außenliegende Führungsflächen ausgebildet, wobei an die weiteren außenliegenden Führungsflächen angrenzende Teilbereiche des Pedalgehäuses zu den kreisbogenförmigen Führungsflächen des Pedalhebelkopfs komplementär ausgebildet sind. Durch die komplementäre Ausbildung kann sichergestellt sein, dass der Pedalhebelkopf leichtgängig in dem Pedalgehäuse schwenkbar ist, wobei die außenliegenden Führungsflächen auf den Teilbereichen des Pedalgehäuses gleiten oder von diesen, etwa durch das Lager, beabstandet sein können.

Gemäß einer Ausführungsform der Erfindung ist an dem starren Bereich des Pedalkopfs eine radial über die kreisbogenförmige außenliegende Führungsfläche abragende starre Anschlagfläche vorgesehen, welche in der Ruheposition des Pedalhebels an einer komplementären Innenfläche des Pedalgehäuses anliegt. Die starre Anschlagfläche sowie die Innenfläche können jeweils im Wesentlichen eben ausgestaltet sein, so dass die Anschlagfläche in der Ruheposition des Pedalhebels flächig auf der Innenfläche anliegen kann. Durch einen flächigen Berührkontakt zwischen den beiden Flächen kann ein robustes und über die gesamte Lebensdauer des Fahrpedalmoduls zuverlässiges Anschlagelement für die Ruheposition des Pedalhebels ausgebildet sein. Dadurch kann erreicht werden, dass der Pedalhebel auch nicht durch große Krafteinwirkung, wie etwa ein Ziehen an dem Fußpedal, entgegen einer Betätigungsrichtung über die Ruheposition hinaus bewegt werden kann, wodurch sich beispielsweise ein elektrisches Leerlaufsignal des Drehsensors ändern könnte. Damit kann ein über die gesamte die Lebensdauer des Fahrpedalmoduls nahezu konstantes Leerlaufsignal in der Ruheposition sichergestellt sein. Auch kann durch ein flächiges Anschlagelement ein Verstellen der Ruheposition durch eine Retardation, etwa plastisches Fließen, und/oder durch anderweitigen Verschleiß gering gehalten werden.

Gemäß einer Ausführungsform der Erfindung weist das freitragende Ende des länglichen elastischen Bereichs des Pedalkopfs eine einer Angriffsfläche des Rückstellfederelements gegenüberliegende bewegliche Anschlagfläche auf, welche in der Ruheposition des Pedalhebels an einer komplementären Innenfläche des Pedalgehäuses anliegt. Das Adjektiv "beweglich" ist hierbei lediglich zur Unterscheidung gegenüber der "starren" Anschlagsfläche des starren Bereichs zu verstehen und nicht als einschränkend anzusehen. Die bewegliche Anschlagfläche des elastischen Bereichs kann ähnlich der starren Anschlagfläche in der Ruheposition flächig auf der Innenfläche anliegen. Dadurch kann zusätzlich sichergestellt sein, dass der Pedalhebel nicht entgegen der Betätigungsrichtung über die Ruheposition hinaus bewegt werden kann.

Gemäß einer weiteren Ausführungsform der Erfindung liegen die starre Anschlagfläche und die bewegliche Anschlagfläche bei in der Ruheposition angeordnetem Pedalhebel in einer gleichen Ebene. Die starre und die bewegliche Anschlagfläche können in der Ruheposition fluchtend miteinander flächig auf der Innenfläche aufliegen.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Explosionszeichnung eines Fahrpedalmoduls gemäß einem Ausführungsbeispiel der Erfindung.
Fig. 2 zeigt eine perspektivische Ansicht eines Pedalhebelkopfes für ein Fahrpedalmodul gemäß einem Ausführungsbeispiel der Erfindung.
Fig. 3 zeigt eine Draufsicht auf einen Pedalhebelkopf für Fahrpedalmodul gemäß einem Ausführungsbeispiel der Erfindung.
Fig. 4 und 5 zeigen jeweils einen Schnitt entlang verschiedener Mittelebenen durch einen Teil eines Fahrpedalmoduls gemäß einem Ausführungsbeispiel der Erfindung.
Fig. 6 zeigt eine perspektivische Ansicht eines Pedalhebelkopfes für das Fahrpedalmodul aus Fig. 4 und 5.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

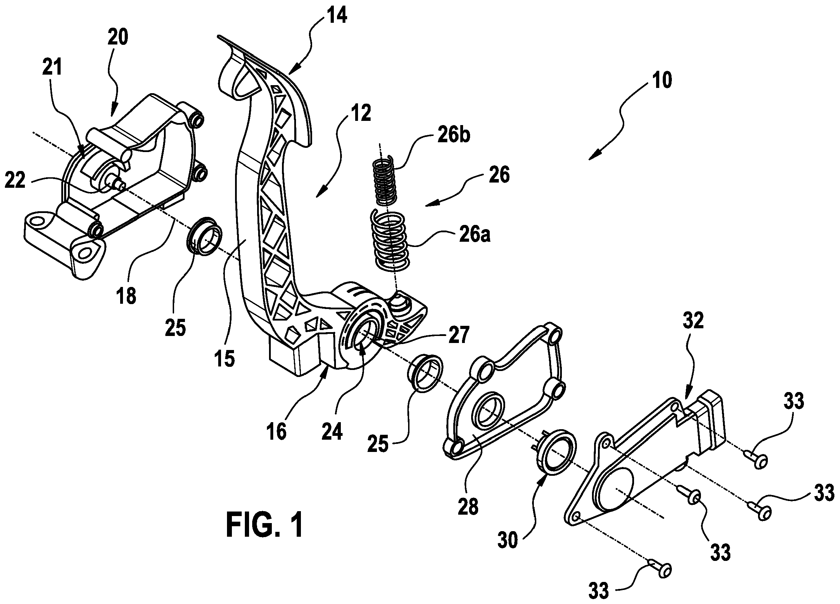

Fig. 1 zeigt eine Explosionszeichnung eines Fahrpedalmoduls 10 gemäß einem Ausführungsbeispiel.

Das Fahrpedalmodul 10 weist einen Pedalhebel 12 auf, welcher an einem ersten Ende ein Fußpedal 14 und an einem dem ersten Ende gegenüberliegenden zweiten Ende einen Pedalhebelkopf 16 aufweist. Das Fußpedal 14 und der Pedalhebelkopf 16 sind über einen Hebelarm 15 miteinander verbunden. Der Pedalhebel 12 kann insgesamt einstückig gefertigt sein.

Der Pedalhebelkopf 16 ist zumindest teilweise in einem Pedalgehäuse 20 aufgenommen. Das Pedalgehäuse 20 kann becherförmig ausgestaltet sein und den Pedalhebelkopf 16 von einer Seite zumindest teilweise umgreifen, wobei das Fußpedal 14 und der Hebelarm 15 zumindest teilweise aus einer Pedalöffnung 21 ragen können.

Der Pedalhebel 12 ist um eine Drehachse 18 drehbar in dem Pedalgehäuse 20 gelagert. Dazu weist das Pedalgehäuse 20 eine zylindrische Abragung 22 auf, welche die Drehachse 18 definieren kann. Weiter weist der Pedalhebelkopf 12 ein Lager 24 zur drehbaren Lagerung des Pedalhebels 12 in dem Pedalhebelgehäuse 20 auf. Das Lager 24 weist eine Lagerausnehmung 27 auf, welche den Pedalhebelkopf 12 entlang der Drehachse 18 vollständig durchziehen kann. An zwei sich bezüglich einer zur Drehachse 18 orthogonalen Mittelebene gegenüberliegenden Seiten des Pedalhebelkopfes 16 ist jeweils ein im Wesentlichen hohlzylindrisches Gleitelement 25 zumindest teilweise in der Lagerausnehmung 27 aufgenommen. Die Gleitelemente 25 können bezüglich eines Innendurchmessers mit einem Außendurchmesser der Abragung 22 des Pedalgehäuses 20 abgestimmt sein, so dass die Abragung 22 zur drehbaren Lagerung des Pedalhebels 12 zumindest teilweise in die Gleitelemente 25 sowie die Lagerausnehmung 24 greifen kann.

Weiter weist das Fahrpedalmodul 10 ein Rückstellfederelement 26 auf, welches mit einem ersten Ende an dem Pedalhebelkopf 16 und mit einem dem ersten Ende gegenüberliegenden zweiten Ende an dem Pedalgehäuse 20 abgestützt ist, so dass es eine Rückstellkraft auf den Pedalhebel 12 hin zu einer Ruheposition des Pedalhebels 12 ausübt bzw. generiert. Dazu weist das Rückstellfederelement 26 eine erste Schraubenfeder 26a und eine konzentrisch in der ersten Schraubenfeder 26a angeordnete zweite Schraubenfeder 26b auf, welche jeweils zwischen Pedalgehäuse 20 und Pedalhebel 12 angeordnet sind, so dass der Pedalhebel 12 in Richtung der Ruheposition vorgespannt ist. Das Rückstellfederelement 26 kann auch wenigstens eine Sprungfeder, eine Gasdruckfeder, eine Blattfeder, eine Spiralfeder, eine Evolutfeder oder ein anderes Federelement aufweisen.

Auf einer dem Pedalgehäuse 20 gegenüberliegenden weiteren Seite weist das Fahrpedalmodul 10 einen Gehäusedeckel 28 auf, welcher den Pedalhebelkopf 16 seitlich zumindest teilweise überdeckt.

Koaxial zur Drehachse 18 ist außenseitig an dem Gehäusedeckel 28 ein Magnetsensor 30 angeordnet, welcher dazu ausgeführt ist, eine Stellung des Pedalhebels 12 zu bestimmen. Der Magnetsensor 30 kann auch an anderer Stelle verbaut sein. Beispielsweise kann der Magnetsensor 30 mittig im Pedalgehäuse 20 angeordnet sein, wobei ferner ein Magnetelement in dem Pedalhebelkopf 16 integriert, beispielsweise eingespritzt, sein kann.

Weiter weist das Fahrpedalmodul 10 an der dem Pedalgehäuse 20 gegenüberliegenden weiteren Seite eine Sensorabdeckung 32 auf, welche parallel zum Gehäusedeckel 28 angeordnet ist und den Magnetsensor 30 außenseitig überdeckt. Mittels vier Bolzenelementen 33 kann die Sensorabdeckung 32 und der Gehäusedeckel 28 mit dem Pedalgehäuse verbunden, beispielsweise verschraubt oder verklemmt, werden. Die Bolzenelemente 33 können dabei beispielsweise durch entsprechende Ausnehmungen an der Sensorabdeckung 32 sowie an dem Gehäusedeckel 28 parallel zur Drehachse 18 geschoben werden und in entsprechenden Ausnehmungen in dem Pedalgehäuse 20 verschraubt oder verklemmt werden.

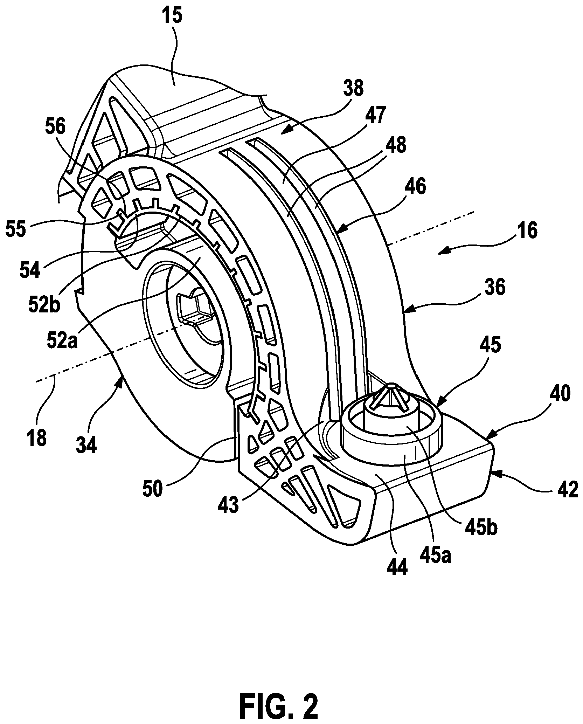

Fig. 2 zeigt eine perspektivische Ansicht eines Pedalhebelkopfes 16 für ein Fahrpedalmodul 10 gemäß einem Ausführungsbeispiel.

Der Pedalhebelkopf 16 weist einen starren, im Wesentlichen zylindrischen Bereich 34 und einen länglichen elastischen Bereich 36, welcher den starren Bereich 34 außenseitig um die Drehachse 18 herum teilweise umläuft. Der längliche elastische Bereich 36 ist an einem ersten Ende 38 mit dem starren Bereich 34 sowie mit dem Hebelarm 15 verbunden und an einem zweiten Ende 40 freitragend ausgestaltet.

An dem zweiten Ende 40 des elastischen Bereichs 36 ist ferner ein Stützelement 42 angeordnet, welches im Wesentlichen orthogonal zur Drehachse 18 von dem starren Bereich 34 abragt. Das Stützelement 42 ist insbesondere dazu ausgestaltet, das Rückstellfederelement 26 an einer Angriffsfläche 44, an welcher das Rückstellfederelement 26 angreifen kann, abzustützen. Zur lateralen Fixierung des Rückstellfederelements 26 kann außenseitig auf der Angriffsfläche 44 wenigstens ein Fixierelement 45 angeordnet sein. Das Fixierelement 45 kann beispielsweise eine zylindrische Abragung 45b aufweisen, welche teilweise in die zweite Schraubenfeder 26b ragen kann. Weiter kann das Fixierelement 45 eine hohlzylindrische weitere Abragung 45a aufweisen, welche teilweise in die erste Schraubenfeder 26a ragen kann. Ferner kann in einem Teilbereich der Angriffsfläche 44 ein Anschlagelement 43 angeordnet sein, an welchem die erste Schraubenfeder 26a zur lateralen Fixierung außenseitig teilweise anliegen kann.

Der längliche elastische Bereich 36 weist eine längliche Ausnehmung 46 auf, welche den elastischen Bereich 36 in Längserstreckungsrichtung zumindest teilweise durchzieht und in welcher ein Teilbereich 47 des starren Bereichs 34 rippenartig aufgenommen ist. Seitlich ist der Teilbereich 47 jeweils durch einen Spalt 48 von dem elastischen Bereich 36 beabstandet.

Auch das freitragende zweite Ende 40 des elastischen Bereichs 36 bzw. das Stützelement 42 ist von dem starren Bereich 34 durch einen Spalt 50 beabstandet.

Weiter weist der Pedalhebelkopf 16 zwei einander gegenüberliegende und konzentrisch zur Drehachse 18 angeordnete Führungsflächen 52a, 52b auf. Die Führungsflächen 52a, 52b sind dabei innenliegend im Pedalhebelkopf angeordnet. Die Führungsflächen 52a, 52b sind ferner kreisbogenförmig ausgestaltet und können die Drehachse 18 teilweise umlaufen. Beispielsweise können die Führungsflächen 52a, 52b die Drehachse 18 über einen Winkel zwischen 20° und 300°, vorzugsweise über einen Winkel zwischen 90° und 220°, umlaufen. Die Führungsfläche 52a kann dabei durch einen Teilbereich des starren Bereichs 34 gebildet sein und der Drehachse 18 abgewandt sein. Die Führungsfläche 52b kann dagegen durch einen Teilbereich des länglichen elastischen Bereichs 36 gebildet sein und der Drehachse 18 zugewandt sein. An der durch einen Teilbereich des länglichen elastischen Bereichs 36 gebildeten Führungsfläche 52b kann zur Erhöhung einer Reibung ein Reibelement 54 angeordnet sein. Das Reibelement 54 kann dabei vollflächig oder teilflächig auf der Führungsfläche 52b angeordnet sein. Das Reibelement 54 kann strahlenartige Fortsätze bzw. Abragungen 55 aufweisen, welche zur Fixierung des Reibelements 54 an dem elastischen Bereich 36 formschlüssig in komplementär ausgestaltete Ausnehmungen 56 des elastischen Bereichs 36 eingreifen können. Alternativ oder zusätzlich kann das Reibelement 54 an der durch den elastischen Bereich 36 gebildeten Führungsfläche 52b aufgeklebt sein. Das Reibelement 54 kann beispielsweise aus einem Elastomer, etwa einem Gummimaterial, Kunststoff oder einem anderen geeigneten Material zur Erhöhung der Reibung gefertigt sein.

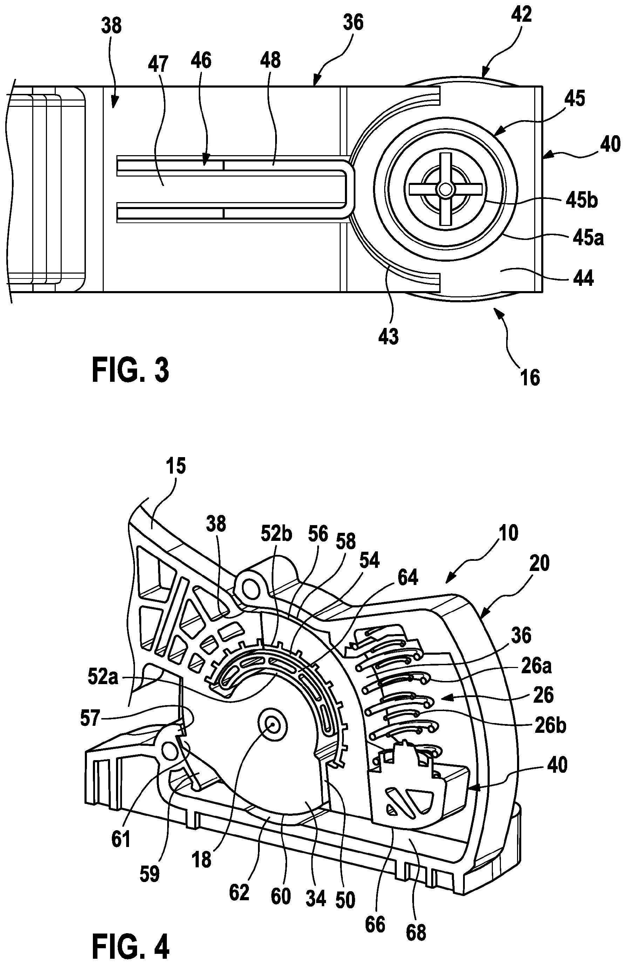

Fig. 3 zeigt eine Draufsicht auf einen Pedalhebelkopf 16 für Fahrpedalmodul 10 gemäß einem Ausführungsbeispiel. In der Draufsicht ist der Teilbereich 46 des starren Bereichs 34, welcher rippenartig in der Ausnehmung 46 des elastischen Bereichs 36 aufgenommen ist, deutlich zu erkennen. Weiter ist der Spalt 48 gut erkennbar, welcher den Teilbereich 46 in Draufsicht U-förmig umläuft.

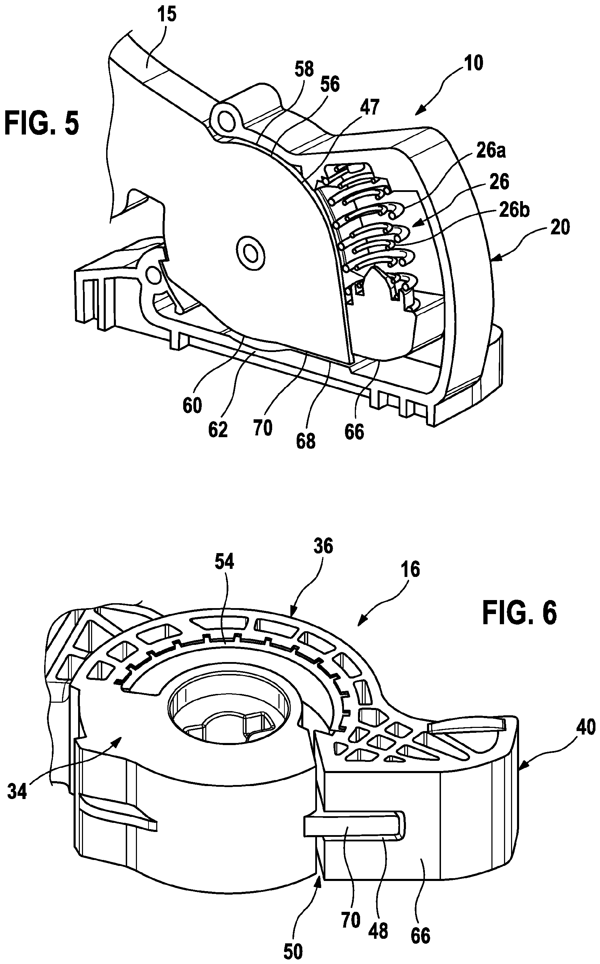

Fig. 4 und 5 zeigen jeweils einen Schnitt entlang verschiedener Mittelebenen durch einen Pedalhebelkopf 16 und ein Pedalgehäuse 20 eines Fahrpedalmoduls 10 gemäß einem Ausführungsbeispiel. Die Mittelebenen verlaufen dabei jeweils orthogonal zur Drehachse 18, wobei sie in Fig. 4 durch den Spalt 48 und in Fig. 5 durch den Teilbereich 47 des starren Bereichs 34 verläuft. In Fig. 6 ist ferner eine perspektivische Ansicht des Pedalhebelkopfes 16 aus Fig. 4 und 5 gezeigt.

Der Pedalhebelkopf 16 weist angrenzend an das erste Ende 38 des elastischen Bereichs 36 an einer Außenoberfläche eine weitere Führungsfläche 56 auf. Die Führungsfläche 56 ist kreisbogenförmig ausgestaltet und konzentrisch zur Drehachse 18 angeordnet. Ein an die Führungsfläche 56 angrenzender Teilbereich 58 des Pedalgehäuses 20 ist komplementär zu der kreisbogenförmigen Führungsfläche 56 ausgestaltet, so dass der Pedalhebelkopf 16 drehbar in dem Pedalgehäuse 20 aufgenommen ist. Die Führungsfläche 56 kann in Gleitkontakt mit dem Teilbereich 58 stehen oder von diesem durch einen Spalt beabstandet sein.

Weiter weist der Pedalhebelkopf 16 an einer der außenliegenden Führungsfläche 56 bezüglich der Drehachse 18 gegenüberliegenden Seite eine weitere Führungsfläche 60 auf. Die Führungsfläche 60 ist durch einen Teilbereich einer Außenoberfläche des starren Bereichs 34 gebildet, kreisbogenförmig ausgestaltet und konzentrisch zur Drehachse 18 angeordnet. Ein an die Führungsfläche 60 angrenzender Teilbereich 62 des Pedalgehäuses 20 ist komplementär zu der kreisbogenförmigen Führungsfläche 60 ausgestaltet, so dass der Pedalhebelkopf 16 drehbar in dem Pedalgehäuse 20 aufgenommen ist. Auch die Führungsfläche 60 kann in Gleitkontakt mit dem Teilbereich 62 stehen oder von diesem durch einen Spalt beabstandet sein.

Weiter weist der Pedalhebelkopf 16 an einem dem Rückstellfederelement 26 bezüglich der Drehachse 18 gegenüberliegenden Ende eine Fixierrippe 61 auf, welche in der Ruheposition des Pedalhebels 12 an einem komplementären Hakenelement 57 des Pedalgehäuses 20 anliegen kann. In der Ruheposition kann die Fixierrippe 61 formschlüssig an dem Hakenelement 57 anliegen, so dass der Pedalhebel 12 nicht entgegen einer Betätigungsrichtung des Pedalhebels 12 über die Ruheposition hinaus bewegt werden kann. Angrenzend an das Hakenelement 57 ist innenliegend im Pedalgehäuse 20 eine Rampe 59 angeordnet, über welche die Fixierrippe 61 bei Betätigen des Pedalhebels 12 gleiten kann und welche als Führungselement dienen kann.

Weiter weist der Pedalhebelkopf 16 an dem Teilbereich 47 des starren Bereichs 34 eine starre Anschlagfläche 70 auf, welche radial über die kreisbogenförmige außenliegende Führungsfläche 60 abragt und welche in der Ruheposition des Pedalhebels 12 an einer komplementären Innenfläche 68 des Pedalgehäuses 20 anliegt. Ähnlich weist das freitragende Ende 40 des länglichen elastischen Bereichs 36 eine der Angriffsfläche 44 des Rückstellfederelements 26 gegenüberliegende bewegliche Anschlagfläche 66 auf, welche ebenfalls in der Ruheposition des Pedalhebels 12 an der komplementären Innenfläche 68 des Pedalgehäuses 20 anliegt. Die starre Anschlagfläche 70, die bewegliche Anschlagfläche 66 sowie die komplementäre Innenfläche 68 können im Wesentlichen plan ausgestaltet sein. In der Ruheposition des Pedalhebels 12 können die starre Anschlagfläche 70 und die bewegliche Anschlagfläche 66 in einer gemeinsamen Ebene an der Innenfläche 68 anliegen, so dass der Pedalhebel 12 nicht entgegen einer Betätigungsrichtung über die Ruheposition hinaus bewegt werden kann.

Das Pedalgehäuse 20 weist ferner innenliegend einen kreisbogenförmigen und zur Drehachse 18 konzentrischen Vorsprung 64 auf, welcher komplementär zu den Führungsflächen 52a, 52b ausgestaltet ist und zwischen die beiden Führungsflächen 52a, 52b eingreift. Dabei kann eine zur Drehachse 18 gewandte erste Außenoberfläche des Vorsprungs 64 an der Führungsfläche 52a des starren Bereichs 34 anliegen und eine der ersten Außenoberfläche gegenüberliegende und der Drehachse 18 abgewandte zweite Außenoberfläche kann mittelbar über das Reibelement 54 an der Führungsfläche 52b des elastischen Bereichs 36 anliegen.

Wird der Pedalhebel 12 verhältnismäßig wenig aus der Ruheposition heraus in Betätigungsrichtung betätigt, so kann die Fixierrippe 61 bei Rotation des Pedalhebels 12 über die Rampe 59 gleiten. Dabei kann der längliche elastische Bereich 36 elastisch deformiert werden und der Spalt 50 zwischen dem starren Bereich 34 und dem elastischen Bereich 36 kann verkleinert werden. Auch kann die starre Anschlagfläche 70 von der Innenfläche 68 abgehoben werden und die Führungsfläche 52a des starren Bereichs 34 kann radial gegen den Vorsprung 64 des Pedalgehäuses gedrückt werden. Eine der Betätigung des Pedalhebels 12 entgegenwirkende Kraft kann so über einen gewissen Pedalweg verhältnismäßig gering sein. Wird der Pedalhebel 12 weiter in Betätigungsrichtung betätigt, so kann eine den Spalt 50 begrenzende Fläche des starren Bereichs 34 an eine gegenüberliegende Fläche des elastischen Bereichs 36 stoßen bzw. drücken, die bewegliche Anschlagfläche 66 kann von der Innenfläche 68 abgehoben werden und das Rückstellfederelement 26 kann gestaucht werden. Mit zunehmender Stauchung des Rückstellfederelements 26 kann trommelbremsenartig die Führungsfläche 52b des elastischen Bereichs 36 sowie das Reibelement 54 zunehmend radial gegen den Vorsprung 64 gedrückt werden, so dass die der Betätigung des Pedalhebels 12 entgegenwirkende Kraft im Wesentlichen linear mit dem Pedalweg bis zu einem maximalen Pedalweg zunehmen kann. Wird der Pedalhebel 12 wieder ein wenig in Richtung der Ruheposition bewegt, so kann sich der Spalt 50 wieder öffnen. Die Führungsfläche 52b kann dabei durch das Rückstellfederelement 26 mit nahezu konstanter Kraft gegen den Vorsprung 64 gedrückt werden. Dies kann vorteilhaft im Hinblick auf einen Komfort für einen Fahrer eines Kraftfahrzeugs mit dem Fahrpedalmodul 10 sein, da beispielsweise eine Geschwindigkeit des Kraftfahrzeugs nahezu konstant gehalten werden, jedoch eine auf den Pedalhebel 12 ausgeübte Kraft durch leichtes Loslassen des Fußpedals 14 reduziert werden kann. Wird der Pedalhebel 20 weiter in Richtung der Ruheposition bewegt, so verringert sich die Stauchung des Rückstellfederelements 26 und die der Betätigung des Pedalhebels 12 entgegenwirkende Kraft sinkt linear bis zur Ruheposition ab. Insgesamt ergibt sich so durch das Zusammenwirken des starren Bereichs 34, des elastischen Bereichs 36 sowie des Spaltes 50 ein hystereseartiger Verlauf der Betätigungskraft des Pedalhebels 12 gegen den Pedalweg bzw. einen Betätigungsweg des Pedalhebels 12. In diesem Kontext kann der elastische Bereich 36 des Pedalhebelkopfes 16 als Hysteresebereich bezeichnet werden

Ergänzend ist darauf hinzuweisen, dass Begriffe wie "umfassend" keine anderen Elemente oder Schritte ausschließen und Begriffe wie "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Fahrpedalmodul (10) für ein Kraftfahrzeug, aufweisend:
einen Pedalhebel (12);
ein Pedalgehäuse (20);
ein Rückstellfederelement (26);
wobei der Pedalhebel (12) an einem Ende einen Pedalhebelkopf (16) aufweist, über den der Pedalhebel (12) um eine Drehachse (18) drehbar an dem Pedalgehäuse (20) gelagert ist;
wobei der Pedalhebelkopf (16) zwei einander gegenüberliegende und konzentrisch mit der Drehachse (18) angeordnete innenliegende kreisbogenförmige Führungsflächen (52a, 52b) aufweist und an dem Pedalgehäuse (20) ein näherungsweise komplementär zwischen die innenliegenden Führungsflächen (52a, 52b) eingreifender, kreisbogenförmiger Vorsprung (64) ausgebildet ist,
wobei das Rückstellfederelement (26) derart zwischen dem Pedalgehäuse (20) und dem Pedalhebelkopf (16) angeordnet ist, dass es eine Rückstellkraft auf den Pedalhebel (12) hin zu einer Ruheposition ausübt;
**dadurch gekennzeichnet, dass**
der Pedalhebelkopf (16) einen starren Bereich (34) und einen länglichen elastischen Bereich (36) aufweist;
wobei das Rückstellfederelement (26) zwischen dem länglichen elastischen Bereich (36) und dem Pedalgehäuse (20) angreift;
wobei eine der innenliegenden Führungsflächen (52b) an dem länglichen elastischen Bereich (36) gebildet ist; und
wobei der längliche elastische Bereich (36) an einem ersten Ende (38) mit dem starren Bereich (34) verbunden ist und an einem zweiten Ende (40) freitragend und über einen Spalt (50) von dem starren Bereich (34) beabstandet ist.

2. Fahrpedalmodul (10) nach Anspruch 1, wobei der Pedalhebel (12) einstückig ausgebildet ist.

3. Fahrpedalmodul (10) nach Anspruch 1 oder 2, wobei an einer der innenliegenden Führungsflächen (52a, 52b) eine reibungserhöhende Oberfläche vorgesehen ist.

4. Fahrpedalmodul (10) nach Anspruch 3, wobei die reibungserhöhende Oberfläche an der an dem länglichen elastischen Bereich (36) ausgebildeten innenliegenden Führungsfläche (52b) vorgesehen ist.

5. Fahrpedalmodul (10) nach Anspruch 3 oder 4, wobei die reibungserhöhende Oberfläche durch ein an dem länglichen elastischen Bereich (36) angeordnetes Reibelement (54) bereitgestellt ist.

6. Fahrpedalmodul (10) nach einem der voranstehenden Ansprüche, wobei an dem starren Bereich (34) ein Lager (24) vorgesehen ist, über das der Pedalhebel (12) drehbar an dem Pedalgehäuse (20) gelagert ist.

7. Fahrpedalmodul (10) nach einem der voranstehenden Ansprüche, wobei zwei Teilbereiche einer Außenoberfläche des Pedalhebelkopfs als weitere konzentrisch mit der Drehachse angeordnete kreisbogenförmige außenliegende Führungsflächen (56, 60) ausgebildet sind und wobei an die weiteren außenliegenden Führungsflächen (56, 60) angrenzende Teilbereiche (58, 62) des Pedalgehäuses (20) zu den außenliegenden Führungsflächen (56, 60) des Pedalhebelkopfs (16) komplementär ausgebildet sind.

8. Fahrpedalmodul (10) nach Anspruch 7, wobei an dem starren Bereich (34) des Pedalhebelkopfs (16) eine radial über die kreisbogenförmige außenliegende Führungsfläche (60) abragende starre Anschlagfläche (70) vorgesehen ist, welche in der Ruheposition des Pedalhebels (12) an einer komplementären Innenfläche (68) des Pedalgehäuses (20) anliegt.

9. Fahrpedalmodul (10) nach einem der voranstehenden Ansprüche, wobei das freitragende Ende (40) des länglichen elastischen Bereichs (36) des Pedalhebelkopfs (16) eine einer Angriffsfläche (44) des Rückstellfederelements (26) gegenüberliegende bewegliche Anschlagfläche (66) aufweist, welche in der Ruheposition des Pedalhebels (12) an einer komplementären Innenfläche (68) des Pedalgehäuses (20) anliegt.

10. Fahrpedalmodul (10) nach einem der Ansprüche 8 und 9, wobei die starre Anschlagfläche (70) und die bewegliche Anschlagfläche (66) bei in der Ruheposition angeordnetem Pedalhebel (12) in einer gleichen Ebene liegen.

## Claims

1. Accelerator pedal module (10) for a motor vehicle, having:
a pedal lever (12); a pedal housing (20);
a restoring spring element (26);
wherein the pedal lever (12) has, on one end, a pedal lever head (16) via which the pedal lever (12) is mounted, rotatably about an axis of rotation (18), on the pedal housing (20);
wherein the pedal lever head (16) has two mutually oppositely situated, inner circular-arc-shaped guide surfaces (52a, 52b) which are arranged concentrically with respect to the axis of rotation (18), and, on the pedal housing (20),
there is formed a circular-arc-shaped projection (64) which engages in an approximately complementary manner between the inner guide surfaces (52a, 52b),
wherein the restoring spring element (26) is arranged between the pedal housing (20) and the pedal lever head (16) so as to exert a restoring force on the pedal lever (12) in the direction of a rest position;
**characterized in that**
the pedal lever head (16) has a rigid region (34) and an elongate elastic region (36);
wherein the restoring spring element (26) engages between the elongate elastic region (36) and the pedal housing (20);
wherein one of the inner guide surfaces (52b) is formed on the elongate elastic region (36); and
wherein the elongate elastic region (36), at a first end (38), is connected to the rigid region (34), and, at a second end (40), is self-supporting and is spaced apart from the rigid region (34) by a gap (50).

2. Accelerator pedal module (10) according to Claim 1, wherein the pedal lever (12) is formed in one piece.

3. Accelerator pedal module (10) according to Claim 1 or 2, wherein a friction-increasing surface is provided on one of the inner guide surfaces (52a, 52b) .

4. Accelerator pedal module (10) according to Claim 3, wherein the friction-increasing surface is provided on the inner guide surface (52b) formed on the elongate elastic region (36).

5. Accelerator pedal module (10) according to Claim 3 or 4, wherein the friction-increasing surface is provided by a friction element (54) arranged on the elongate elastic region (36).

6. Accelerator pedal module (10) according to one of the preceding claims, wherein, on the rigid region (34), there is provided a bearing (24) by means of which the pedal lever (12) is mounted rotatably on the pedal housing (20).

7. Accelerator pedal module (10) according to one of the preceding claims, wherein two partial regions of an outer surface of the pedal lever head are formed as further circular-arc-shaped outer guide surfaces (56, 60) arranged concentrically with respect to the axis of rotation, and wherein partial regions (58, 62) of the pedal housing (20) which adjoin the further outer guide surfaces (56, 60) are of complementary form with respect to the outer guide surfaces (56, 60) of the pedal lever head (16).

8. Accelerator pedal module (10) according to Claim 7, wherein, on the rigid region (34) of the pedal lever head (16), there is provided a rigid abutment surface (70) which projects radially beyond the circular-arc-shaped outer guide surface (60) and which, in the rest position of the pedal lever (12), bears against a complementary inner surface (68) of the pedal housing (20).

9. Accelerator pedal module (10) according to one of the preceding claims, wherein the self-supporting end (40) of the elongate elastic region (36) of the pedal lever head (16) has a movable abutment surface (66) which is situated opposite an engagement surface (44) of the restoring spring element (26) and which, in the rest position of the pedal lever (12), bears against a complementary inner surface (68) of the pedal housing (20).

10. Accelerator pedal module (10) according to of Claims 8 and 9, wherein the rigid abutment surface (70) and the movable abutment surface (66) lie in the same plane when the pedal lever (12) is arranged in the rest position.

## Revendications

1. Module (10) de pédale d'accélérateur pour véhicule automobile, le module présentant :
un levier de pédale (12),
un boîtier de pédale (20),
un élément (26) à ressort de rappel,
le levier de pédale (12) présentant à une extrémité une tête (16) de levier de pédale par laquelle le levier de pédale (12) est monté sur le boîtier de pédale (20) à rotation autour d'un axe de rotation (18),
la tête (16) de levier de pédale présentant deux surfaces intérieures de guidage (52a, 52b) en forme d'arc de cercle mutuellement opposées et disposées concentriquement par rapport à l'axe de rotation (18) et une saillie (64) en forme d'arc de cercle étant formée sur le boîtier de pédale (20) et s'engageant de manière sensiblement complémentaire entre les surfaces intérieures de guidage (52a, 52b),
l'élément (26) à ressort de rappel étant disposé entre le boîtier de pédale (20) et la tête (16) de levier de pédale de telle sorte qu'il exerce sur le levier de pédale (12) une force de rappel jusqu'à une position de repos,
**caractérisé en ce que**
la tête (16) de levier de pédale présente une partie rigide (34) et une partie élastique allongée (36),
l'élément (26) à ressort de rappel s'engageant entre la partie élastique allongée (36) et le boîtier de pédale (20),
l'une (52b) des surfaces intérieures de guidage étant formée sur la partie élastique allongée (36),
la partie élastique allongée (36) étant reliée par une première extrémité (38) à la partie rigide (34), étant auto-portante à une autre extrémité (40) et y étant maintenue à distance de la partie rigide (34) par l'intermédiaire d'un interstice (50).

2. Module (10) de pédale d'accélérateur selon la revendication 1, dans lequel le levier de pédale (12) est formé d'une seule pièce.

3. Module (10) de pédale d'accélérateur selon les revendications 1 ou 2, dans lequel une surface de renforcement du frottement est prévue sur l'une des surfaces intérieures de guidage (52a, 52b).

4. Module (10) de pédale d'accélérateur selon la revendication 3, dans lequel la surface renforçant le frottement est prévue sur la surfaces intérieures de guidage (52a, 52b) formée sur la partie élastique allongée (36).

5. Module (10) de pédale d'accélérateur selon les revendications 3 ou 4, dans lequel la surface renforçant le frottement est formée par un élément de frottement (54) disposé sur la partie élastique allongée (36).

6. Module (10) de pédale d'accélérateur selon l'une des revendications précédentes, dans lequel un palier (24) par lequel le levier de pédale (12) est monté à rotation sur le boîtier de pédale (20) est prévu sur la partie rigide (34).

7. Module (10) de pédale d'accélérateur selon l'une des revendications précédentes, dans lequel deux parties d'une surface extérieure de la tête de levier de pédale sont configurées comme autres surfaces extérieures de guidage (56, 60) en forme d'arc de cercle disposées concentriquement par rapport à l'axe de rotation et dans lequel des parties (58, 62) du boîtier de pédale (20) adjacentes aux autres surfaces extérieures de guidage (56, 60) sont complémentaires des autres surfaces extérieures de guidage (56, 60) de la tête (16) de levier de pédale.

8. Module (10) de pédale d'accélérateur selon la revendication 7, dans lequel une surface rigide de butée (70) débordant radialement au-delà de la surface extérieure de guidage (60) en forme d'arc de cercle est prévue sur la partie rigide (34) de la tête (16) de levier de pédale et repose contre une surface intérieure complémentaire (68) du boîtier de pédale (20) lorsque le levier de pédale (12) est en position de repos.

9. Module (10) de pédale d'accélérateur selon l'une des revendications précédentes, dans lequel l'extrémité portant librement (40) de la partie élastique allongée (36) de la tête (16) de levier de pédale présente une surface mobile de butée (66) située face à la surface d'engagement (44) de l'élément (26) à ressort de rappel et repose contre une surface intérieure complémentaire (68) du boîtier de pédale (20) lorsque le levier de pédale (12) est en position de repos.

10. Module (10) de pédale d'accélérateur selon l'une des revendications 8 et 9, dans lequel la surface rigide de butée (70) et la surface mobile de butée (66) sont situées dans le même plan lorsque le levier de pédale (12) est en position de repos.
